# EUROPÄISCHE PATENTSCHRIFT

(11) **EP 3 162 742 B1**
(45) Veröffentlichungstag und Bekanntmachung des Hinweises auf die Patenterteilung: **19.02.2025**
(21) Anmeldenummer: 15192624.3
(22) Anmeldetag: 02.11.2015
(51) Int. Cl.: B65G 47/96, B65G 47/64, B65G 43/10, B65G 47/94, G05B 19/418

(54) **SORTIERMECHANISMUS MIT VERTEILTER STEUERUNG**
SORTING MECHANISM WITH DISTRIBUTED CONTROL
SYSTEME DE TRI AYANT UNE COMMANDE DISTRIBUEE

(43) Veröffentlichungstag der Anmeldung: 03.05.2017
(73) Patentinhaber: Siemens Logistics GmbH, 90429 Nürnberg (DE)
(72) Erfinder: KUTZER, Oliver, 78315 Radolfzell (DE)
(74) Vertreter: Siemens Patent Attorneys

(56) Entgegenhaltungen:
- EP-A1- 1 508 541
- EP-A1- 1 719 721
- WO-A1-2012/154650
- WO-A1-2013/075714
- WO-A1-99/37563
- WO-A2-2006/102691
- CH-A5- 678 715
- DE-A1- 102010 022 156
- DE-A1- 4 115 327
- DE-B- 1 263 600
- US-A- 5 632 589
- US-A- 5 701 992

## Beschreibung

Die vorliegende Erfindung bezieht sich auf das technische Gebiet des Sortierens von Stückgut, wie beispielsweise Flughafengepäck oder Pakete, mittels individuell kippbarer Förderstreckensegmente, die ein Stückgut mittels koordinierter Kippbewegungen aus der Förderstrecke befördern.

WO2013/075714A1 offenbart einen Sortiermechanismus, der arrangiert ist Behälter zum Tragen einer Ladung zu entleeren. Der Sortiermechanismus hat eine Mehrzahl von benachbarten individuell kippbaren Kippelementen. Die Kippelemente werden mittels eines computerisierten Controllers kontrolliert, um eine koordinierte Kippbewegung durchzuführen. Nachteilig ist dabei, dass der computerisierte Controller angepasst werden muss, falls der Sortiermechanismus um weitere Kippelemente erweitert wird. Ebenso muss der computerisierte Controller ausreichend leistungsfähig sein, um sämtliche Kippelemente koordinieren zu können. WO2013/075714A1 offenbart den Oberbegriff der Ansprüche 1 und 9.

Ein Sorter besteht aus einer Reihe von Segmenten, die hintereinander angeordnet sind. Über diese Segmente wird eine Wanne transportiert. Durch eine Kippbewegung der Segmente kann die Wanne entleert werden.

Bisher wurde die Ansteuerung der Segmente über eine zentrale Steuerung realisiert. Bisher wird die zentrale Steuerung entsprechend der Leistungsanforderungen ausgelegt. Aufgrund von Einschränkungen des Kommunikationsbusses kann dabei eine bestimmte Länge nicht überschritten werden. Dies hat den Nachteil, das die Anzahl der ansteuerbaren Segmente und damit die Länge des Sorters beschränkt ist. Dieses Steuerungskonzept ermöglicht keine flexible Erweiterung des Systems.

Der Erfindung liegt daher die Aufgabe zugrunde einen Sortiermechanismus zu ermöglichen, der auf einfachere Weise erweiterbar ist.

Diese Aufgabe wird durch die in den unabhängigen Ansprüchen beschriebenen Lösungen gelöst. Vorteilhafte Ausgestaltungen der Erfindung sind in weiteren Ansprüchen angegeben.

Gemäss einem Aspekt wird ein Verfahren zum Steuern eines Sortiermechanismus vorgestellt. Der Sortiermechanismus ist ausgestaltet, ein auf einer Förderstrecke befördertes auszusortierendes Stückgut mittels koordinierter Kippbewegungen von quer zur Förderstrecke kippbaren Förderstreckensegmenten seitwärts aus der Förderstrecke zu befördern. Dabei wird das Stückgut von einem ersten sich in gekipptem Zustand befindlichen Förderstreckensegment an ein zweites sich in gekipptem Zustand befindliches Förderstreckensegment zu übergeben. Ein erster Aktuator zum Kippen des ersten Förderstreckensegments wird durch eine erste Segmentsteuereinrichtung angesteuert. Ein zweiter Aktuator zum Kippen des zweiten Förderstreckensegments wird durch eine zweite Segmentsteuereinrichtung angesteuert. Die erste Segmentsteuereinrichtung und die zweite Segmentsteuereinrichtung kommunizieren miteinander, um das Stückgut von dem ersten sich in gekipptem Zustand befindlichen Förderstreckensegment an das zweite sich in gekipptem Zustand befindliche Förderstreckensegment zu übergeben.

Auf diese Weise kann eine zentrale Steuereinrichtung von der Koordinationsaufgabe der Übergabe von einem Förderstreckensegments zum nächsten Förderstreckensegment entlastet werden. Ebenso ist es möglich, eine zentrale Steuereinrichtung ganz wegzulassen, wenn beispielsweise weitere übergeordnete Funktionen zur Koordination der Förderstreckensegmente von den Segmentsteuereinrichtungen vorgenommen werden.

Bei dem Übergeben des Stückguts von einem ersten sich in gekipptem Zustand befindlichen Förderstreckensegment an ein zweites sich in gekipptem Zustand befindliches Förderstreckensegment, brauchen das erste Förderstreckensegment und das zweite Förderstreckensegment nicht in gekippter Position zu ruhen. Gemäss einer Ausführungsform wird das Stückgut von dem ersten sich in gekipptem Zustand befindlichen Förderstreckensegment an das zweite sich in gekipptem Zustand befindliche Förderstreckensegment übergeben, indem das erste und das zweite Förderstreckensegment eine synchrone Kippbewegung ausführen. Beispielsweise wird bei der Übergabe der Kippwinkel des ersten und des zweiten Förderstreckensegments synchron erhöht, um das Stückgut, respektive einen Behälter in dem das Stückgut während der Übergabe entlang der Förderstrecke bewegt wird, weiter zu kippen. Dadurch kann der Durchsatz von Stückgut durch den Sortiermechanismus erhöht werden. In einer weiteren Ausführungsform können das erste und das zweite Förderstreckensegment bei der Übergabe aber auch ihre Kippposition statisch beibehalten.

Erfindungsgemäß wird jedes der Förderstreckensegmente durch jeweils eine separate Segmentsteuereinrichtung angesteuert, wobei die Segmentsteuereinrichtungen miteinander kommunizieren, um die koordinierten Kippbewegungen zu koordinieren.

Gemäss einer weiteren Ausführungsform kommunizieren die Segmentsteuereinrichtungen miteinander, um abhängig von einer Position des Behälters einen Teil der mehreren Segmentsteuereinrichtungen dynamisch zu mindestens einer logischen Steuergruppe zusammenfassen. Eine solche Gruppe kann beispielsweise einen Behälter, in welchem das Stückgut entlang der Förderstrecke über den Sortiermechanismus geführt wird, ein Stück weit führen und weiter kippen, bis eine neue Gruppe generiert wird, welche den Behälter weiter kippt, oder ihn ausleert. Gemäss einer weiteren Ausführungsform ändert sich somit eine Zusammensetzung von an der Steuergruppe teilnehmenden Segmentsteuereinrichtungen abhängig von einem Transportzustand wie beispielsweise einer Position oder einer Bewegung des Behälters. Alternativ oder zusätzlich, kann sich eine Aufgabe einer der Segmentsteuereinrichtungen innerhalb der Steuergruppe abhängig von einem Transportzustand des Behälters ändern. Dadurch wird eine hohe Flexibilität Verfahrens und des Sortiermechanismus erreicht.

Gemäss einer weiteren Ausführungsform übernimmt eine der Segmentsteuereinrichtungen der Steuergruppe eine Koordinationsaufgabe, mittels der die Steuergruppe koordiniert wird um eine der koordinierten Kippbewegungen auszuführen. Dadurch können auf einfache Weise vielfältige Aufgaben von den Segmentsteuereinrichtungen übernommen und koordiniert werden.

Gemäss einer weiteren Ausführungsform umfassen zumindest ein Teil, vorzugsweise alle der Segmentsteuereinrichtungen, jeweils einen identischen Programmcode, um das Stückgut von einem übergebenden sich in gekipptem Zustand befindlichen Förderstreckensegment an ein nachfolgendes sich in gekipptem Zustand befindliches Förderstreckensegment zu übergeben. Dadurch kann ein Sortiermechanismus noch einfacher um zusätzliche Förderstreckensegmente erweitert werden. Auch erleichtert sich der Wartungsaufwand, wenn alle Segmentsteuereinrichtungen möglichst ähnlich oder gar identisch aufgebaut und programmiert sind.

Gemäss einer weiteren Ausführungsform kommunizieren die Segmentsteuereinrichtungen jeweils nur mit direkt benachbarten Segmentsteuereinrichtungen um beispielsweise eine Kippbewegung zu koordinieren und/oder einen Abstand zwischen zwei benachbarten Behältern einzustellen. Dadurch kann ein Sortiermechanismus noch einfacher um zusätzliche Förderstreckensegmente erweitert werden.

Gemäss einer weiteren Ausführungsform kommunizieren die Segmentsteuereinrichtungen miteinander, um Antriebe der Förderstreckensegmente so anzutreiben, dass ein Sollabstand zwischen zwei nachfolgenden Stückgütern, respektive Behältern, eingehalten wird. Dies ermöglicht es, das Stückgut oder den Behälter je nach seiner Position, nach seiner Grösse, nach seiner Beschaffenheit mit unterschiedlichen Geschwindigkeiten zu transportieren. Beispielsweise ist es wünschenswert, ein schweres oder ein zerbrechliches Stückgut nicht mit einer hohen Geschwindigkeit seitwärts aus der Förderstrecke zu befördern.

Gemäss einem Aspekt betrifft die Erfindung einen Sortiermechanismus zum Aussortieren von Stückgut aus einer Förderstrecke. Der Sortiermechanismus umfasst mindestens zwei Förderstreckensegmente, die einerseits ausgestaltet und angeordnet sind, einen mit einem Stückgut befüllten Behälter zumindest ein Stück weit entlang der Förderstrecke zu führen. Jedes der mindestens zwei Förderstreckensegmente ist andererseits durch individuelle Ansteuerung quer zur Förderstrecke kippbar. Der Sortiermechanismus umfasst zudem ein Steuersystem, das adaptiert ist, zum Aussortieren des Stückguts aus der Förderstrecke die mindestens zwei Förderstreckensegmente so anzusteuern, dass der Behälter noch während er sich entlang der Förderstrecke bewegt, mittels koordinierter Kippbewegungen der mindestens zwei Förderstreckensegmente so gekippt wird, dass das Stückgut seitwärts aus der Förderstrecke befördert wird. Den mindestens zwei Förderstreckensegmenten ist jeweils eine separate Segmentsteuereinrichtung zugeordnet, sodass der Sortiermechanismus mindestens zwei unterschiedlichen Förderstreckensegmenten zugeordnete Segmentsteuereinrichtungen umfasst. Die mindestens zwei Segmentsteuereinrichtungen sind eingerichtet, eine Steuerfunktion für eine Koordination der koordinierten Kippbewegungen der mindestens zwei Förderstreckensegmente auszuführen.

Auf diese Weise kann eine zentrale Steuereinrichtung entlastet werden, da die mindestens zwei Segmentsteuereinrichtungen für die Koordination der koordinierten Kippbewegungen der mindestens zwei Förderstreckensegmente gemeinsam die Steuerfunktion ausführen. Ebenso ist es möglich, eine zentrale Steuereinrichtung ganz wegzulassen, wenn sämtliche übergeordneten Funktionen zur Koordination der Förderstreckensegmente von den Segmentsteuereinrichtungen vorgenommen werden.

Gemäss einem Ausführungsbeispiel sind die Segmentsteuereinrichtungen der mindestens zwei Förderstreckensegmente kommunikativ miteinander verbunden, um die mindestens eine Steuerfunktion aufzuführen.

Gemäss weiteren Ausführungsbeispielen umfasst die mindestens eine Steuerfunktion für eine Koordination der koordinierten Kippbewegungen mindestens eine oder mehrere der folgenden Funktione:
- Durchführen einer Übergabe von einem der Förderstreckensegmente (1a-f) zum nächsten;
- Durchführen einer wellenartigen Kippbewegung, die durch mindestens einen Teil der Förderstreckenseg-mente (1a-f) läuft;
- Starten mindestens einer der Kippbewegungen;
- Anfahren einer Zielposition einer Kippewegung;
- Starten eines Timers;
- Starten eines Zählers;
- Prüfen einer Position, um die Wanne für eine definierte Zeit in der Kippposition zu halten;
- Starten einer Rückschwenkbewegung wenn ein Timer abgelaufen ist;
- Starten einer Rückschwenkbewegung wenn eine Position erreicht ist;
- Anfahren einer Ausgangsposition.

Dadurch kann die Flexibilität des Sortiermechanismus weiter erhöht werden.

Gemäss einem weiteren Ausführungsbeispiel sind die Segmentsteuereinrichtungen eingerichtet, abhängig von einer Position des Behälters einen Teil der mehreren Segmentsteuereinrichtungen dynamisch zu einer logischen Steuergruppe zusammenfassen. Dies erhöht die Flexibilität des Sortiermechanismus und autonome Koordinationsfähigkeit seiner Segmentsteuereinrichtungen weiter.

Beispielsweise sind gemäss einer weiteren Ausführungsform die lokalen Segmentsteuereinrichtungen der mindestens zwei Förderstreckensegmente eingerichtet, dass eine der lokalen Segmentsteuereinrichtungen der Steuergruppe eine Koordinationsaufgabe übernimmt. Mittels der Koordinationsaufgabe wird die Steuergruppe koordiniert um die Steuerfunktion auszuführen.

Gemäss weiteren Ausführungsformen sind die lokalen Segmentsteuereinrichtungen der mindestens zwei Förderstreckensegmente eingerichtet, dass sich eine Zusammensetzung von an der Steuergruppe teilnehmenden Segmentsteuereinrichtungen abhängig von einem Transportzustand wie beispielsweise einer Position oder einer Bewegung des Behälters ändert und/oder, dass sich eine Aufgabe einer der Segmentsteuereinrichtungen innerhalb der Steuergruppe abhängig von einem Transportzustand des Behälters ändert.

Gemäss einem weiteren Ausführungsbeispiel umfassen die Segmentsteuereinrichtungen der mindestens zwei Förderstreckensegmente zum Ausführen der übergeordneten Steuerfunktion zumindest teilweise gleich oder gleich programmiert. Dadurch reduziert sich der Aufwand, den Sortiermechanismus um weitere individuell kippbare Förderstreckensegmente zu erweiteren. Ebenso wird die Wartung vereinfacht.

Gemäss einem weiteren Ausführungsbeispiel sind die mindestens zwei Förderstreckensegmente als Teil der Förderstrecke angeordnet.

Gemäss einem weiteren Ausführungsbeispiel sind die den mindestens zwei Förderstreckensegmenten zugeordneten lokalen Segmentsteuereinrichtungen eingerichtet zum Ausführen der übergeordneten Steuerfunktion nur mit den Segmentsteuereinrichtungen von direkt benachbarten der mindestens zwei Förderstreckensegmente zu kommunizieren.

Gemäss einem weiteren Ausführungsbeispiel umfassen zumindest eines, vorzugsweise mehrere, vorzugsweise alle der mindestens zwei Förderstreckensegmente jeweils mindestens ein Antriebsmittel zum Antreiben des Behälters in Transportrichtung.

Gemäss einem weiteren Ausführungsbeispiel wird das Verfahren zum Ansteuern eines Sortiermechanismus für Stückgüter in einem der vorangehend beschriebenen Sortiermechanismen eingesetzt. Beispielsweise umfasst der Sortiermechanismus eine Pluralität von Förderstreckensegmenten, die einerseits ausgestaltet und angeordnet sind, einen mit einem Stückgut befüllten Behälter zumindest ein Stück weit entlang einer Förderstrecke zu führen, und die andererseits durch individuelle Ansteuerung quer zur Förderstrecke kippbar sind. Mindestens zwei der Förderstreckensegmente werden so angesteuert, dass der Behälter noch während er sich entlang der mindestens zwei Förderstreckensegmente bewegt, mittels koordinierter Kippbewegungen der angesteuerten Förderstreckensegmente so gekippt wird, dass das Stückgut seitwärts aus der Förderstrecke befördert wird. Dabei ist den mindestens zwei der Förderstreckensegmente jeweils eine separate Segmentsteuereinrichtung zugeordnet, die untereinander Informationen austauschen um eine Steuerfunktion für eine Koordination der koordinierten Kippbewegungen der mindestens zwei Förderstreckensegmenten ausführen.

Die Erfindung wird nachfolgend anhand der Zeichnung beispielsweise näher erläutert. Dabei zeigen:
Figuren 1A-1C schematische seitliche Schnittdarstellungen eines mit einer Segmentsteuereinrichtung verbundenen Förderstreckensegments in verschiedenen Kipppositionen;
Figur 2 eine schematische Seitenansicht eines Sortiermechanismus 200 gemäss einem Ausführungsbeispiel der Erfindung mit zwei zu einem Förderstreckenabschnitt angeordneten Förderstreckensegmenten gemäss Figur 1;
Figur 3 eine schematische Seitenansicht eines Sortiermechanismus gemäss einem Ausführungsbeispiel der Erfindung mit mehreren zu einem Förderstreckenabschnitt angeordneten Förderstreckensegmenten gemäss Figur 1;
Figur 4 zeigt ein Steuerungskonzept für einen Sortiermechanismus gemäss einer weiteren Ausführungsform

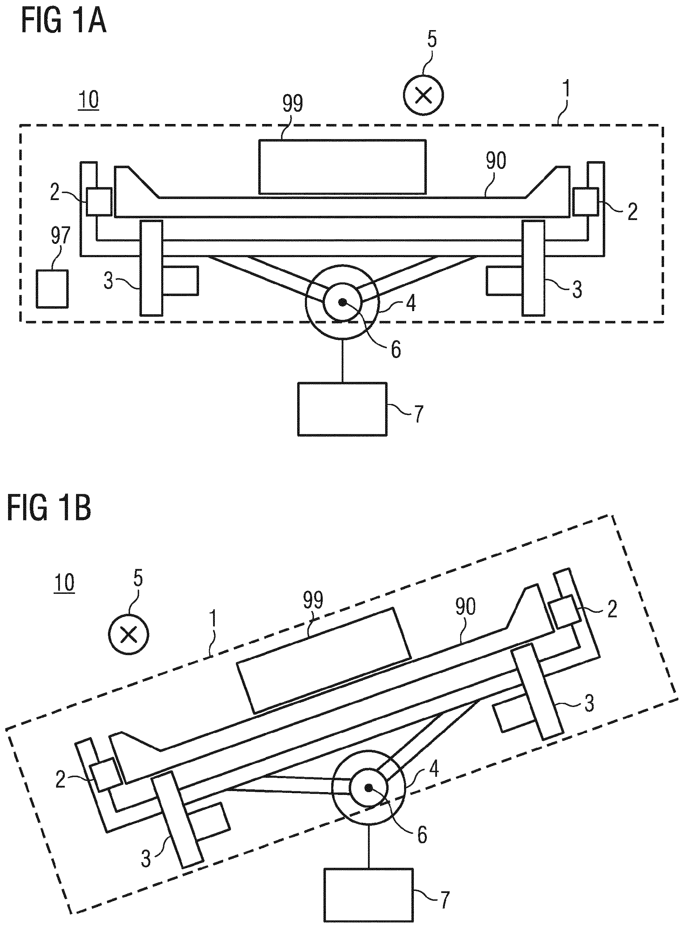

Figur 1A zeigt eine schematische seitliche Schnittdarstellung eines mit einer Segmentsteuereinrichtung 7 verbundenen Förderstreckensegments 1 in einer waagrechten Kippposition. Ein Kippsegment 10 umfasst die Segmentsteuereinrichtung 7 und das Förderstreckensegment 1. Das Förderstreckensegment 1 ist mit der Segmentsteuereinrichtung 7 verbunden. Das Förderstreckensegment 1 kann die Segmentsteuereinrichtung 7 umfassen oder Segmentsteuereinrichtung 7 kann abgesetzt von dem Förderstreckensegment 1 angeordnet sein.

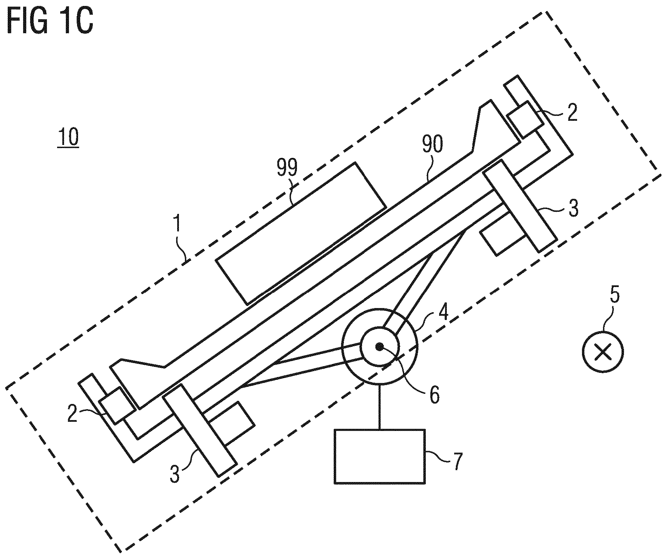

Das Förderstreckensegment 1 umfasst eine Führstruktur, um einen mit einem Stückgut 99 befüllten Behälter 90 zumindest ein Stück weit entlang einer Förderstrecke in einer Förderrichtung 5 zu führen. Die Führstruktur kann beispielsweise als seitlich angeordnete frei laufende Rollen 2 ausgestaltet sein, die ohne motorischen Antrieb den Behälter 90 führen. Die Führstruktur kann auch als Antrieb ausgestaltet sein, beispielsweise als Förderband, oder wie in Figur 1 dargestellt als Reibradantrieb mit einem oder mehreren Reibrädern 3. Die Führstruktur kann auch als Kombination mehrerer solcher Führstrukturen ausgestaltet sein, beispielsweise als eine Kombination von seitlichen Rollen 2 und Reibradantrieb 3.

Das Förderstreckensegment 1 umfasst zudem einen mit der Segmentsteuereinrichtung 7 verbundenen Aktuator 4, mittels welchem sich das Förderstreckensegment 1 quer zur Förderrichtung 5 kippen lässt. Dazu umfasst das Förderstreckensegment 1 die zur Förderrichtung 5 parallele Achse 6. Die Achse 6 kann mittels geeigneter Mechanik nur virtuell oder als Welle ausgeführt sein.

Die Segmentsteuereinrichtung 7 ist ausgestaltet, dem Förderstreckensegment 1 Steuersignale zu übermitteln, um das Förderstreckensegment 1 zu kippen. Es sind Ausführungsformen möglich, bei denen das Förderstreckensegment 1 in nur eine Richtung aus seiner waagrechten Position auslenkbar ist

Der Begriff "Kippen des Förderstreckensegments" sowie dazu analoge Begriffe umfassen auch, dass nur ein Teil des Förderstreckensegments gekippt wird.

Das Förderstreckensegment 1 kann zudem ein Sensorsystem 97 umfassen. Das Sensorsystem 97 kann beispielsweise ein oder mehrere der folgenden Geräte umfassen:
- eine oder mehrere Anwesenheitsdetektoren, wie beispielsweise Lichtschranken, zum Detektieren der Anwesenheit oder Abwesenheit eines Behälters im Sensorerfassungsbereich;
- ein Lesegerät zum Auslesen einer Information des Behälters oder des von dem Behälter mitgeführten Stückguts 99;
- einen Geschwindigkeitsmesser zum Messen der Geschwindigkeit des Behälters 99 in Förderrichtung 5;
- Einen Winkelmesser, zum Messen eines Kippwinkels des Förderstreckensegments 1.

Figur 1B zeigt das Förderstreckensegment 1 in einem gekippten Zustand. Figur 1C zeigt das Förderstreckensegment 1 in einem noch weiter gekippten Zustand. Es sind sowohl Ausführungsformen möglich, bei denen Förderstreckensegmente 1 in nur eine Drehrichtung, beispielsweise im Uhrzeigersinn aus seiner waagrechten Position kippbar sind, als auch Ausführungsformen, bei denen Förderstreckensegmente in beide Drehrichtungen kippbar sind.

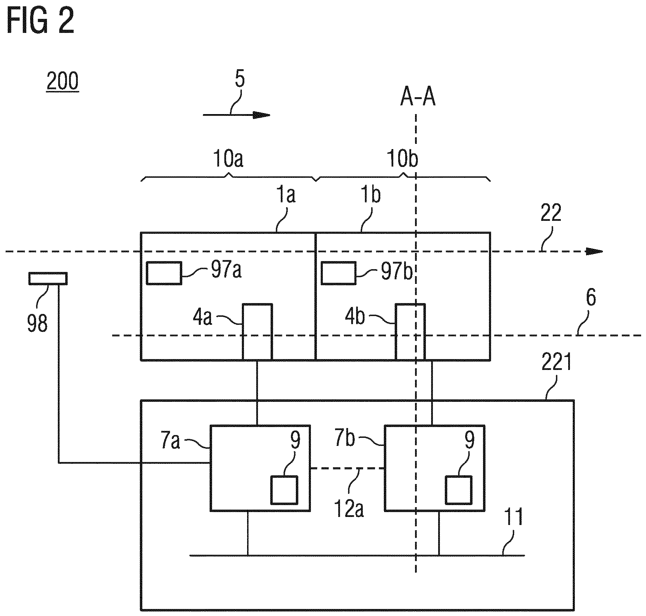

Figur 2 zeigt eine schematische Seitenansicht eines Sortiermechanismus 200 gemäss einem Ausführungsbeispiel der Erfindung. Der Sortiermechanismus 200 umfasst ein Steuersystem 221 und zwei Förderstreckensegmente 1a, 1b. Als Förderstreckensegmente 1a, 1b kann jeweils das in Figur 1A-1C dargestellte Förderstreckensegment 1 verwendet werden, wobei in Figur 2 im Vergleich zu den Figuren 1A-1C die Seitenansicht um 90° gedreht ist, wie anhand der Förderrichtung 5 ersichtlich ist. Die Ansicht des in Figuren 1A-C dargestellten Förderstreckensegments entspricht beispielsweise einer senkrechten Sicht auf die in Figur 2 dargestellte Ebene A-A durch das Förderstreckensegment 1b. Die Förderstreckensegmente 1a, 1b können auch jeweils einen Aktuator 4a, 4b, und ein Sensorsystem 97a, 97b umfassen. Die Sensorsysteme 97a, 97b sind jedoch nicht notwendig. Es ist beispielsweise bei konstanter oder voraussagbarer Fördergeschwindigkeit nicht notwendig, dass eines der Förderstreckensegmente 1a, 1b ein Sensorsystem umfasst.

Die Förderstreckensegmente 1a, 1b sind so angeordnet, dass sie einen Förderstreckenabschnitt einer Förderstrecke 22 bilden, sodass sie einen mit einem Stückgut 99 befüllten Behälter 90 zumindest ein Stück weit entlang des Förderstreckenabschnitts führen können. Die Förderstreckensegmente 1a, 1b sind durch individuelle Ansteuerung quer zur Förderstrecke 22 kippbar. Dazu ist jedes der Förderstreckensegmente wie das in Figuren 1A-1C beschriebene beispielhafte Förderstreckensegment 1 ausgestaltet und jeweils mit einer separaten von dem Steuersystem 221 umfassten lokalen Segmentsteuereinrichtung 7a, 7b verbunden. Jedes der Förderstreckensegmente 1a, 1b wird dabei zusammen mit der mit ihr jeweils zugeordneten Segmentsteuereinrichtung 7a, 7b von einem Segmentmodul 10a, 10b umfasst. Mit andern Worten: Das Segmentmodul 10a umfasst die Segmentsteuereinrichtung 7a und das durch die Segmentsteuereinrichtung 7a zur Ausführung einer Kippbewegung ansteuerbare Förderstreckensegment 1a. Das Segmentmodul 10b umfasst die Segmentsteuereinrichtung 7b und das durch die Segmentsteuereinrichtung 7b zur Ausführung einer Kippbewegung ansteuerbare Förderstreckensegment 1b.

Die Segmentsteuereinrichtungen 7a und 7b sind adaptiert miteinander über die Verbindung 12 zu kommunizieren zum Aussortieren des Stückguts 99 die zwei Förderstreckensegmente 1a, 1b so anzusteuern, dass der Behälter 90 noch während er sich entlang der Förderstrecke 22 bewegt, mittels koordinierter Kippbewegungen der zwei Förderstreckensegmente 1a, 1b so gekippt wird, dass das Stückgut 99 seitwärts aus der Förderstrecke befördert wird.

Dazu erhält beispielsweise das erste Förderstreckensegment 1a beispielsweise von einer Leseeinheit 98, die einen Barcode auf dem in den Sortiermechanismus 200 einfahrenden Behälter 99 abliest, eine Information, dass Behälter 99 nun in den Sortiermechanismus 200 einfährt und aus der Förderstrecke 22 auszusortieren ist. Das Förderstreckensegment 1a signalisiert dies dem Förderstreckensegment 1b mittels eines Telegramms weiter. Sobald der Behälter 99 vollständig auf dem sich zunächst in waagrechter Position befindenden Förderstreckensegment 1a aufliegt, bringen sich beide Förderstreckensegmente 1a, 1b während sich der Behälter 99 über das Förderstreckensegment 1a bewegt in eine in Figur 1B gezeigte gekippte Position. Sobald der Behälter 99 das Ende des Förderstreckensegments 1a erreicht hat, beginnt die Übergabe an das Förderstreckensegment 1b. Während der Übergabe befinden sich die beiden Förderstreckensegmente 1a, 1b in oder bewegen sich mit einem identischen Kippwinkel. Sobald der Behälter 99 das erste Förderstreckensegment 1a vollständig verlassen hat, kann das erste Förderstreckensegment 1a wieder in die waagrechte Lage gekippt werden, um somit für die Aufnahme eines nächsten Behälters bereitzustehen, während das zweite Förderstreckensegment 1b den Behälter noch während er über das zweite Förderstreckensegment 1b fährt weiter kippt, bis das sich in dem Behälter 99 befindliche Stückgut seitwärts aus dem Behälter gekippt und somit seitwärts aus der Förderstrecke 22 befördert wird.

Wird der Sortiermechanismus mit konstanter Geschwindigkeit betrieben, sodass die Behälter sich mit konstanter Geschwindigkeit durch den Sortiermechanismus bewegen, dann kann das von dem Förderstreckensegment 1a an das Förderstreckensegment 1b übermittelte Telegramm einen Zeitpunkt beinhalten, der dem Förderstreckensegment 1b signalisiert, wann es sich in der in Figur 1B dargestellten Position, also in der Übergabeposition befinden muss. Mittels beispielsweise eines Timers kann sich das Förderstreckensegment 1b somit rechtzeitig in die Übergabeposition bewegen.

Um die Zuverlässigkeit zu erhöhen oder bei variabler oder schlecht oder nicht prognostizierbarer Fördergeschwindigkeit, können in anderen Ausführungsformen weitere beispielsweise als Lichtschranken ausgestaltete Sensoren 97a, 97b vorgesehen sein, welche beispielsweise dem ersten Förderstreckensegment 1a signalisiert, wenn der Behälter 99 das Förderstreckensegment 1a verlassen hat, damit sichergestellt wird, dass das erste Förderstreckensegment erst wieder in die waagrechte Position übergeht, nachdem der Behälter 99 an das zweite Förderstreckensegment 1b vollständig übergeben worden ist.

Die Segmentsteuereinrichtungen 7a, 7b sind nicht nur ausgestaltet, ihrem jeweils zugeordneten Förderstreckensegment 1a, 1b ein Signal zu übermitteln, um welchen Winkel dieses gekippt werden soll, sondern die Segmentsteuereinrichtungen 7a, 7b sind fähig eine koordinierten Auskippvorgang an dem beide Förderstreckensegment 1a, 1b beteiligt sind zu koordinieren. Mit andern Worten: Die Segmentsteuereinrichtungen 7a, 7b sind somit eingerichtet, eine Steuerfunktion für eine Koordination der koordinierten Kippbewegungen der mindestens zwei Förderstreckensegmenten 1a, 1b auszuführen.

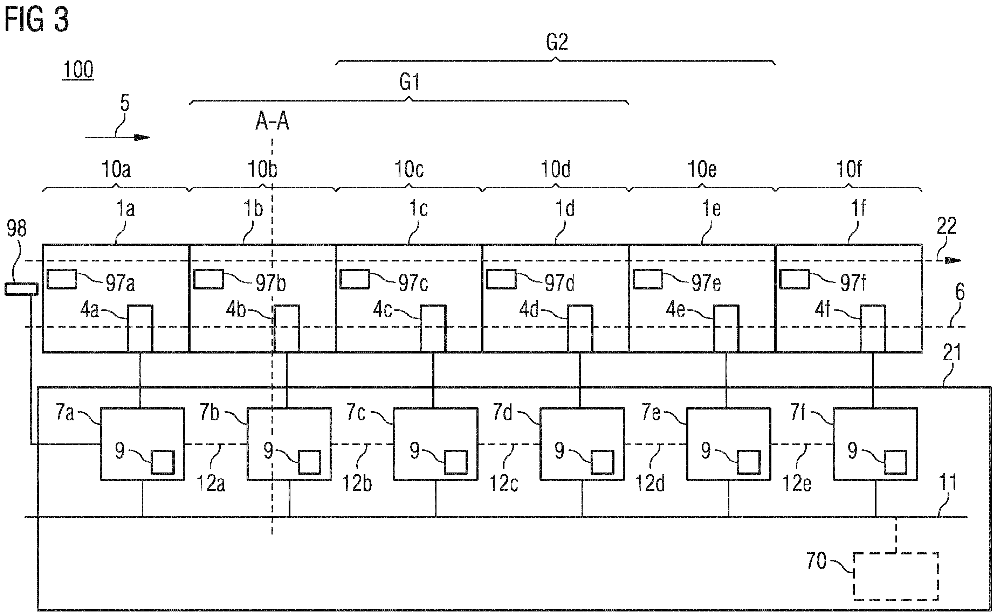

An einem koordinierten Auskippvorgang können sich auch mehr als zwei Förderstreckensegmente beteiligen. Beispielsweise können dann falls ein Behälter länger ist als ein Förderstreckensegment jeweils zwei oder mehr individuell kippbare Förderstreckensegmente betrieben werden als wären sie nur eine Förderstreckensegment um ein in dem längeren Behälter sich befindendes Stückgut 99 mittels eines wellenartig durch den Sortiermechanismus laufenden Kippvorgangs auszusortieren. Ebenso kann durch eine höhere Anzahl an kippbaren Förderstreckensegmenten die Flexibilität des Systems erhöht, und beispielsweise mit dem Zusammenspiel von mehr als zwei Förderstreckensegmenten feiner abgestimmte Auskippvorgänge vollführt werden. Da bei dem in Figur 2 dargestellten Sortiermechanismus 200 keine zentrale Steuerung für die Koordination eines Auskippvorgangs notwendig ist, lässt sich der Sortiermechanismus auf einfache Weise modular erweitern, beispielsweise zu dem folgenden anhand von Figur 3 beschriebenen Sortiermechanismus.

Figur 3 zeigt eine schematische Seitenansicht eines Sortiermechanismus 100 gemäss einem Ausführungsbeispiel der Erfindung. Die Ansicht des in Figuren 1A-1C dargestellten Förderstreckensegments 1a entspricht beispielsweise einer senkrechten Sicht auf die in Figur 3 dargestellte Ebene A-A. Der Sortiermechanismus 100 umfasst ein Steuersystem 21 sowie mehrere Förderstreckensegmente 1a, 1b, 1c, 1d, 1e, 1f, die jeweils mit einer separaten ihr zugeordneten Segmentsteuereinrichtung 7a, 7b, 7c, 7d, 7e, 7f verbunden sind. Jedes der Förderstreckensegmente 1a, 1b, 1c, 1d, 1e, 1f kann beispielsweise gemäss dem in Figuren 1A-1C dargestellten Förderstreckensegment 1 ausgeführt sein, und jeweils wie in Figur 3 dargestellt einen Aktuator 4a-4f und ein Sensorsystem 97a-f umfassen. Jede der Segmentsteuereinrichtung 7a-f kann beispielsweise gemäss der in Figuren 1A-1C dargestellten Segmentsteuereinrichtung 7 ausgeführt sein. Das Steuersystem 21 umfasst die Segmentsteuereinrichtungen 7a-7f. Optional umfasst das Steuersystem auch eine zentrale Steuerung 70.

Die Förderstreckensegmente 1a-f sind ausgestaltet und angeordnet, einen mit einem Stückgut 99 befüllten Behälter 90 zumindest ein Stück weit entlang der Förderstrecke 22 zu führen. Die Förderstreckensegmente 1a-f sind zudem durch individuelle Ansteuerung quer zur Förderstrecke 5 um eine zur Förderrichtung parallele Achse 6 kippbar.

Die Segmentsteuereinrichtungen 7a-f sind adaptiert, zum Aussortieren des Stückguts 99 die Förderstreckensegmente 1a-f so anzusteuern, dass der Behälter 90 noch während er sich entlang der Förderstrecke 22 bewegt, mittels koordinierter Kippbewegungen zumindest eines Teils der Förderstreckensegmente 1a-f so gekippt wird, dass das Stückgut 99 seitwärts aus der Förderstrecke 22 befördert wird.

In dem in Figur 3 dargestellten Ausführungsbeispiel ist jedes der Förderstreckensegmente 1a-1f jeweils mit einer separaten von dem Steuersystem 21 umfassten lokalen Segmentsteuereinrichtungen 7a-7f so verbunden, dass sich das jeweilige Förderstreckensegment 1a-1f individuell kippen lässt. Dadurch ist jedem der Förderstreckensegmente 1a-1f jeweils eine separate lokale Steuereinrichtung 7a-7f zugeordnet. Selbstverständlich sind Varianten des Sortiermechanismus möglich, bei welchen einzelne der Förderstreckensegmente 1a-1f keine separate Segmentsteuereinrichtung zugeordnet ist. Beispielsweise lassen sich bei dem Sortiermechanismus 100 zwei Förderstreckensegmente, beispielsweise 1a, 1b auswählen, die wie Förderstreckensegmente 1a-1b im Sortiermechanismus 200 aufgebaut sind und betrieben werden, während die übrigen Förderstreckensegmente 1c-1f nicht in einen Auskippvorgang involviert sein müssen. Es ist somit ausreichend, wenn in einer Variante des in Figur 3 dargestellten Ausführungsbeispiels mindestens zwei der Förderstreckensegmenten 1a-1f jeweils eine separate lokale Segmentsteuereinrichtung zugeordnet ist. Auch müssen im Rahmen von Ausführungsformen der Erfindung nicht zwingend alle Förderstreckensegmente 1a-1f oder deren zugeordnete lokale Segmentsteuereinrichtungen 7a-7f an einem Auskippvorgang beteiligt sein. Die Segmentsteuereinrichtungen 7a-f sind eingerichtet, eine Steuerfunktion für eine Koordination der koordinierten Kippbewegungen der mindestens zwei Förderstreckensegmente 1a-f auszuführen. In einer Ausführungsform übernehmen die Segmentsteuereinrichtungen 7a-f sogar die gesamte Koordination der koordinierten Kippbewegungen.

Wie in Figur 2 sind in Figur 3 die Förderstreckensegmente 1a-f und die dazugehörigen Segmentsteuereinrichtungen 7a-f jeweils als Segmentmodule 10a-f gebaut. In Varianten können jedoch einzelne oder alle der Segmentsteuereinrichtungen 7a-f abgesetzt von dem jeweiligen Förderstreckensegmente 1a-f mit diesem verbunden sein.

Die Segmentsteuereinrichtungen 7a-7f sind mittels eines Datenbus-Systems 11 miteinander verbunden. Zusätzlich oder alternativ zu dem Datenbus-System können die Segmentsteuereinrichtungen miteinander auch seriell miteinander verbunden sein, wie durch die gestrichelt gezeichneten elektrischen Verbindungen 12a-12e dargestellt ist.

Um das Stückgut 99 aus der Förderstrecke 22 auszusortieren, erfasst beispielsweise das Lesegerät 98, oder das Sensorsystem 97 einen Code auf dem Behälter 90 oder auf dem Stückgut, der anzeigt, dass das Stückgut 99 aus der Förderstrecke 22 auszusortieren ist. Mittels des Datenbus-Systems 11 wird den Segmentsteuereinrichtungen 7a-f mittels eines Telegramms, das das entlang der Förderrichtung 5 von einer Segmentsteuereinrichtung 7a-f zur nächsten gesendet wird, dass das Stückgut 99 auszusortieren ist. Das Telegramm kann einen Zähler umfassen, dessen Zählerwert bei jeder Weitergabe des Telegramms von einer Segmentsteuereinrichtung 7a-f zur nächsten um eins reduziert wird. Jede der Steuereinrichtungen 7a-7f ist ausgestaltet, das ihr zugeordnete Förderstreckensegment 1a-1f so anzusteuern dass der Behälter 90 bei einem anhand des Zählerwerts ermittelten Übernahmekippwinkel in einer synchronen Kippbewegung von dem vorangehenden Förderstreckensegment 7a-7f übernommen und eines anhand des Zählerwerts ermittelten Übergabekippwinkels in einer synchronen Kippbewegung an das nachfolgende Förderstreckensegment 1a-1f übergeben wird. Auf diese Weise können sämtliche Steuereinrichtungen 7a-7f ein identisches Programm 9 umfassen, um eine Steuerfunktion für eine Koordination der koordinierten Kippbewegungen von mindestens zwei Förderstreckensegmenten 1a-f auszuführen. Die Steuerfunktion für eine Koordination der koordinierten Kippbewegungen von mindestens zwei Förderstreckensegmenten 1a-f auszuführen ist in diesem Beispiel die Übergabe des Behälters 99 von einem Förderstreckensegment 1a-1f zum nächsten Förderstreckensegment 1a-1f.

Anstatt eines Zählers kann auch ein Code oder ein Bitfeld verwendet werden. Das Bitfeld wird entlang der Förderrichtung von einer Steuereinrichtung 7a-f zur nächsten gesendet und so codiert, dass jede der Steuereinrichtungen 7a-f ihrem Nachfolger mitteilt, ob diese das ihr zugeordnete Förderstreckensegment 1a-f kippen soll, und in welchem zeitlichen Kippwinkelverlauf.

In einer Ausführungsform koordiniert jedes oder ein Teil oder zumindest zwei der Kippsegmente 10a-f mit ihren unmittelbar benachbarten Kippsegmenten 10a-f die jeweilige Übernahme des Behälters 99 von dem vorangehenden Kippsegmente 10a-f und Weitergabe an das nachfolgende Kippsegmente 10a-f. Die jeweilige Übergabe von einem Kippsegment 10a-f zum nächsten kann durch die Sensorsysteme 97a-f zusätzlich unterstützt werden, indem die Position des Behälters 99 den Segmentsteuereinrichtungen 7a-f, oder den an der Koordination der koordinierten Kippbewegungen beteiligten Segmentsteuereinrichtungen, oder den an der Koordination der Übergebe beteiligten Segmentsteuereinrichtungen 7a-f, signalisiert wird. Auf diese Weise können beispielsweise Abweichungen der effektiven Position von einer vorausgesagten Position des Behälters korrigiert werden.

Gemäss einer Ausführungsvariante umfasst das Steuersystem die lokalen Segmentsteuereinrichtungen 7a-7f sowie eine zentrale Steuereinrichtung 70. Die lokalen Segmentsteuereinrichtungen 7a-7f helfen die übergeordnete Steuereinrichtung 70 zu entlasten. Beispielsweise koordinieren die lokalen Segmentsteuereinrichtungen eine durch die Förderstrecke 22 laufende wellenartige Kippbewegung der Förderstreckensegmente 1a-1f, während die zentrale Steuereinrichtung 70 ebenfalls übergeordnete Funktionen wie beispielsweise eine Abstandsregulierung zwischen benachbarten Behältern koordiniert. Die zentrale Steuereinrichtung 70 ist aber nicht zwingend notwendig. Beispielsweise sind Ausführungsbeispiele möglich, bei denen die Behälter in gleichmässigen Abständen in den Sortiermechanismus eingeschleust werden und mit gleichmässiger Geschwindigkeit entlang der Förderrichtung in dem Sortiermechanismus bewegt werden. Ebenso können weitere übergeordnete Funktionen wie beispielsweise im Falle variabler Behältergeschwindigkeiten und/oder variabler Abstände zwischen Behältern die Abstandsregulierung zwischen benachbart durch den Sortiermechanismus transportierten Behältern durch die lokalen Segmentsteuereinrichtungen 7a-7f übernommen werden.

Ein Sortiermechanismus 100, 200 kann so ausgestaltet sein, dass das Stückgut aus dem Sortiermechanismus 100 befördert wird, indem es aus dem Behälter 90 gekippt wird, während der Behälter 90 in der Förderstrecke 22 des Sortiermechanismus weiter geführt wird. In einer anderen Variante kann der Sortiermechanismus auch ausgestaltet sein, dass der Behälter 90 noch während er eine Geschwindigkeitskomponente in Förderrichtung 5 aufweist mitsamt Stückgut 99 durch die koordinierten Kippbewegungen seitwärts aus dem Sortiermechanismus 100 befördert wird, dass der Behälter 90 mitsamt dem von ihm beinhalteten Stückgut 99 also seitwärts aus der Förderstrecke 22 befördert wird.

Soll ein Stückgut nicht aussortiert werden, so wird es beispielsweise ohne Kippbewegungen entlang der Förderstreckensegmente 1a-1f umfassten Förderstrecke in Förderrichtung 5 weiter befördert.

Gemäss weiteren Ausführungsformen kann ein Sortiermechanismus 100, 200 kann auch noch andere Förderstreckensegmente umfassen, die nicht individuell ansteuerbar sind, oder mittels einer mechanischen Vorrichtung als Reaktion auf das Kippen eines anderen Förderstreckensegments kippen.

Gemäss einer Ausführungsform werden Motoren von Aktuatoren 4a-4f in den Segmenten 1a-f von Mikrokontrollern 7a-7f angesteuert. Diese Kontroller 7a-7f sind programmierbar und können nicht nur die Motorregelung, sondern auch übergeordnete Steuerungsfunktionen der Segmente 1a-1f übernehmen. Dadurch ist eine zentrale Steuerung für die Transport- und Kippfunktion nicht mehr notwendig.

Das Auskippen eines beispielsweise als Wanne ausgestalteten Behälters 99 kann aus mehreren Teilfunktionen bestehen:
- Kippbewegung starten
- Zielposition des Schwenkvorgangs anfahren
- Timer starten / Position prüfen, um die Wanne für eine definierte Zeit in der Kippposition zu halten
- wenn Timer abgelaufen / Position erreicht ist Rückschwenkbewegung starten
- Ausgangsposition anfahren.

Abhängig von der Position der Wanne wird beispielsweise ein Teil der verteilten Steuerungen 7a-f dynamisch zu einer oder mehreren logischen Steuergruppen G1, G2 zusammengefasst. Diese Gruppe G1, G2 wird von einer Segmentsteuereinrichtung, beispielsweise dem Controller 7b der Gruppe G1 koordiniert. Dabei übernimmt dieser Kontroller 7b in Abhängigkeit der Wannenposition die Koordination der Gruppe G1 für eine oder mehrere der obigen Teilfunktionen. Da die Wanne 99 während des Auskippens weitertransportiert werden kann, kann sich die Aufgaben der Kontroller in der Gruppe G1 und die Teilnehmer der Gruppe beim Auskippen ändern.

Weitere Ausführungsformen können beispielsweise die folgenden Merkmale umfassen:
- Jeder Kontroller 7a-f im Bus kommuniziert nur mit seinem direkten Nachbarn oder seinem übernächsten Nachbarn, der mechanisch die gleiche Aufgabe hat.
- Die Kontroller 7a-f erhalten Daten von ihren Nachbarn, manipulieren diese entsprechend der Betriebssituation und leiten diese an ihre Nachbarn weiter. Entsprechend der zu erfassenden Information geschieht dies in oder gegen die Transportrichtung.
- Jeder Kontroller 7a-f ist mit dem gleichen Programm ausgestattet.

Die Kontroller 7a-f können gemäss weiteren Ausführungsformen auch folgende übergeordnete Aufgaben erfüllen:
- Tracking: Jede Wanne 99 hat einen Datensatz der zu verwalten ist. Dieser Datensatz wird von den Kontrollern unter der Wanne gehalten.
- Lückenkontrolle: Die Kontroller 7a-f der Segmente 1a-f unter einer Wanne 99 erfassen durch das oben beschriebenes Kommunikationsverfahren den Abstand zur vorherigen Wanne und die Wannenlänge. In Abhängigkeit dieser Größen wird die Geschwindigkeit der Wanne geregelt.
- Schwenkvorgang: die Kontroller der Segmente unter der Wanne und in Abhängigkeit der Geschwindigkeit auch eine definierte Anzahl von Kontrollern der Segmente vor der Wanne führen eine synchrone Bewegung zum Auskippen der Wanne aus.
- Überwachung des Betriebszustandes: durch das oben beschriebenes Kommunikationsverfahren wird eine Störung in einem Kontroller an die Nachbarn weitergeleitet. Dadurch kann eine Schwenkbewegung sofort synchron unterbrochen und das der Sortiermechanismus 100 oder 200 abgeschaltet werden.

Durch dieses Verfahren ist keine leistungsfähige zentrale Steuerung 70 notwendig. Auch lässt sich ein Sortiermechanismus 100, 200 flexibel erweitern.

Durch geeignete Bauteile wie Bridges oder Router kann der Bus 11 elektrisch so segmentiert werden, dass eine unbegrenzte Anzahl von Segmenten 1a-f zu einem Sortersystem zusammengestellt werden kann.

Gemäss einer Ausführungsform können unterschiedliche lange Behälter verarbeitet werden.

Gemäss einer weiteren Ausführungsform können für die Beförderung der Behälter in Transportrichtung unterschiedliche Geschwindigkeiten auf dem gleichen Sortersystem 100, 200 gefahren werden.

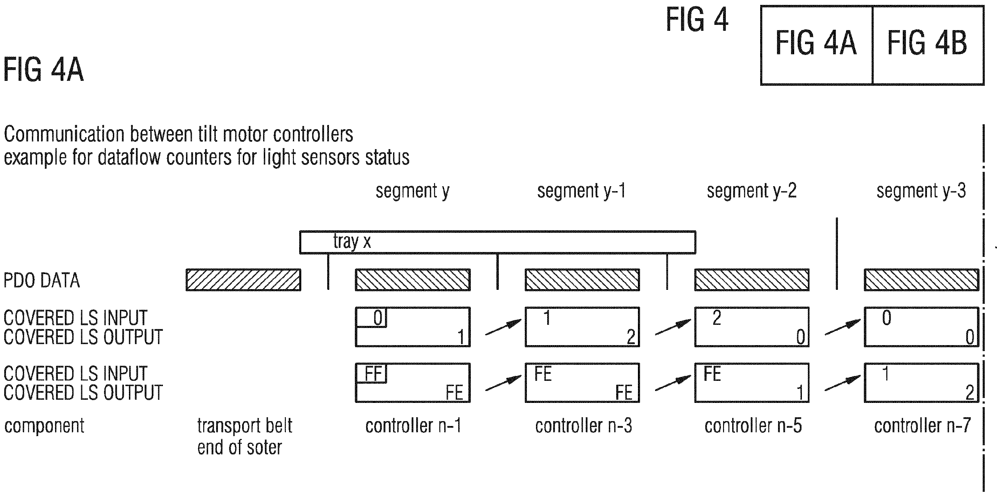

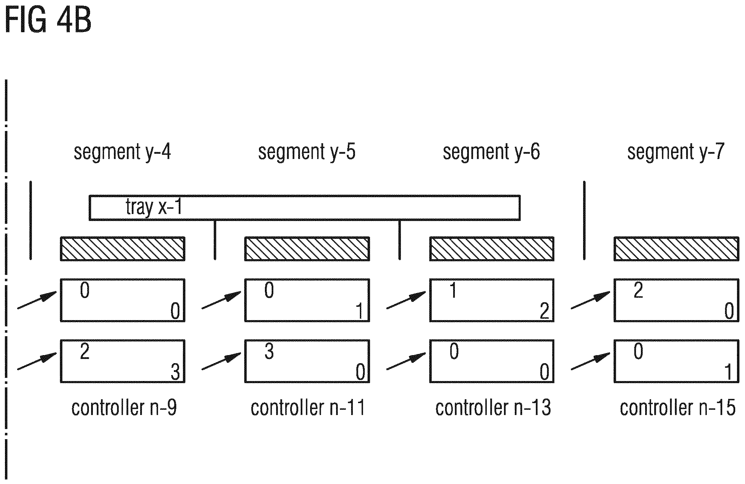

Figur 4 zeigt ein Steuerungskonzept für einen Sortiermechanismus gemäss einer weiteren Ausführungsform. Figur 4 zeigt dabei ein Beispiel für den Datenfluss für Zähler von Lichtschrankenzuständen.

Diese Zähler liefern dem jeweiligen Controller an der entsprechenden Position Informationen über die Lücke vor einem als Wanne ausgestalteten Behälter und Länge der Wanne. Mit dieser Information kann die Geschwindigkeit der Wanne geregelt werden.

COVERED LS INPUT Anzahl bedeckter Lichtschranken, empfangener Wert COVERED LS OUTPUT Anzahl bedeckter Lichtschranken, Wert ist modifiziert, wird gesendet FREE LS INPUT Anzahl freier Lichtschranken, empfangener Wert FREE LS OUTPUT Anzahl freier Lichtschranken, Wert ist modifiziert, wird gesendet

## Patentansprüche

1. Verfahren zum Steuern eines Sortiermechanismus (100, 200), der ausgestaltet ist, ein auf einer Förderstrecke (22) befördertes auszusortierendes Stückgut (99) mittels koordinierter Kippbewegungen von quer zur Förderstrecke (22) kippbaren Förderstreckensegmenten (1a-f) seitwärts aus der Förderstrecke (22) zu befördern, und dabei das Stückgut (99) von einem ersten sich in gekipptem Zustand befindlichen Förderstreckensegment (1a-f) an ein zweites sich in gekipptem Zustand befindlichen Förderstreckensegment (1a-1f) zu übergeben;
**dadurch gekennzeichnet, dass**
ein erster Aktuator (4a-f) zum Kippen des ersten Förderstreckensegments (1a-f) durch eine erste Segmentsteuereinrichtung (7a-f) angesteuert wird, und ein zweiter Aktuator (4a-f) zum Kippen des zweiten Förderstreckensegments (1b-f) durch eine zweite Segmentsteuereinrichtung (7a-7f) angesteuert wird;
und wobei das Verfahren umfasst, dass die erste Segmentsteuereinrichtung (7a-7f) und die zweite Segmentsteuereinrichtung (7a-7f) miteinander kommunizieren, um das Stückgut (99) von dem ersten sich in gekipptem Zustand befindlichen Förderstreckensegment (7a-7f) an das zweite sich in gekipptem Zustand befindliche Förderstreckensegment (7a-7f) zu übergeben, wobei jedes der Förderstreckensegmente (1a-f) durch jeweils eine separate Segmentsteuereinrichtung (7a-f) angesteuert wird, wobei die Segmentsteuereinrichtungen (7a-f) miteinander kommunizieren, um die koordinierten Kippbewegungen zu koordinieren.

2. Verfahren nach Anspruch 1, wobei die Segmentsteuereinrichtungen (7a-f) miteinander kommunizieren, um abhängig von einer Position des Behälters (90) einen Teil der mehreren Segmentsteuereinrichtungen (7a-f) dynamisch zu einer logischen Steuergruppe (G1, G2) zusammenfassen.

3. Verfahren nach Anspruch 2, wobei eine der Segmentsteuereinrichtungen (7a-f) der Steuergruppe (G1, G2) eine Koordinationsaufgabe übernimmt, mittels der die Steuergruppe koordiniert wird um eine der koordinierten Kippbewegungen auszuführen.

4. Verfahren nach Anspruch 2 oder 3, wobei sich eine Zusammensetzung von an der Steuergruppe teilnehmenden Segmentsteuereinrichtungen (7a-f) abhängig von einem Transportzustand wie beispielsweise einer Position oder einer Bewegung des Behälters (90) ändert und/oder, wobei sich eine Aufgabe einer der Segmentsteuereinrichtungen (7a-f) innerhalb der Steuergruppe abhängig von einem Transportzustand des Behälters (90) ändert.

5. Verfahren nach einem der vorhergehenden Ansprüche, wobei zumindest ein Teil, vorzugsweise alle der Segmentsteuereinrichtungen (7a-f), jeweils einen identischen Programmcode umfassen, um das Stückgut (99) von einem übergebenden sich in gekipptem Zustand befindlichen Förderstreckensegment (1a-f) an ein nachfolgendes sich in gekipptem Zustand befindliches Förderstreckensegment (1a-1f) zu übergeben.

6. Verfahren nach einem der vorhergehenden Ansprüche, wobei die Segmentsteuereinrichtungen (7a-f) jeweils nur mit direkt benachbarten Segmentsteuereinrichtungen (7a-f) direkt kommunizieren.

7. Verfahren nach einem der vorhergehenden Ansprüche, wobei die Segmentsteuereinrichtungen (7a-f) miteinander kommunizieren, um Antriebe der Förderstreckensegment so anzutreiben, dass ein Sollabstand zwischen zwei nachfolgenden Förderstücken eingehalten wird.

8. Verfahren nach einem der vorhergehenden Ansprüche, wobei das Stückgut (99) von dem ersten sich in gekipptem Zu-stand befindlichen Förderstreckensegment (1a-f) an das zweite sich in gekipptem Zustand befindliche Förderstreckensegment (1a-1f) übergeben wird, indem das erste und das zweite Förderstreckensegment (1a-f) eine synchrone Bewegung ausführen.

9. Sortiermechanismus (100, 200) zum Aussortieren eines Stückguts (99) aus einer Förderstrecke (6), umfassend:
- mindestens zwei Förderstreckensegmente (1a-f), die einerseits ausgestaltet und angeordnet sind, einen mit einem Stückgut (99) befüllten Behälter (90) zumindest ein Stück weit entlang der Förderstrecke (6) zu führen, und die andererseits durch individuelle Ansteuerung quer zur Förderstrecke (6) kippbar sind;
- ein Steuersystem (21), das adaptiert ist, die mindestens zwei Förderstreckensegmente (1a-f) so anzusteuern, dass der Behälter (90) noch während er sich entlang der Förderstrecke (6) bewegt, mittels koordinierter Kippbewegungen der mindestens zwei Förderstreckensegmente (1a-f) so gekippt wird, dass das Stückgut (99) seitwärts aus der Förderstrecke befördert wird;
- wobei den mindestens zwei Förderstreckensegmenten (1a-f) jeweils eine separate Segmentsteuereinrichtung (7a-f) zugeordnet ist, wobei die Segmentsteuereinrichtungen (7a-f) eingerichtet sind, eine Steuerfunktion für eine Koordination der koordinierten Kippbewegungen der mindestens zwei Förderstreckensegmente (1a-f) auszuführen.

10. Sortiermechanismus (100, 200) nach Anspruch 9, wobei die Segmentsteuereinrichtungen (7a-f) der Förderstreckensegmente (1a-f) kommunikativ miteinander verbunden sind um die mindestens eine Steuerfunktion aufzuführen.

11. Sortiermechanismus (100, 200) nach einem der Ansprüche 9 oder 10, wobei die mindestens eine Steuerfunktion für eine Koordination der koordinierten Kippbewegungen mindestens eine oder mehrere der folgenden Funktionen umfasst:
- Durchführen einer Übergabe von einem der Förderstreckensegmente (1a-f) zum nächsten;
- Durchführen einer wellenartigen Kippbewegung, die durch mindestens einen Teil der Förderstreckensegmente (1a-f) läuft;
- Starten mindestens einer der Kippbewegungen;
- Anfahren einer Zielposition einer Kippewegung;
- Starten eines Timers;
- Starten eines Zählers;
- Prüfen einer Position, um die Wanne für eine definierte Zeit in der Kippposition zu halten;
- Starten einer Rückschwenkbewegung wenn ein Timer abgelaufen ist;
- Starten einer Rückschwenkbewegung wenn eine Position erreicht ist;
- Anfahren einer Ausgangsposition.

12. Sortiermechanismus (100, 200) nach einem der Ansprüche 9 bis 11, wobei die Segmentsteuereinrichtungen (7a-f) eingerichtet sind, abhängig von einer Position des Behälters (90) einen Teil der mehreren Segmentsteuereinrichtungen (7a-f) dynamisch zu einer logischen Steuergruppe (G1, G2) zusammenfassen.

13. Sortiermechanismus (100, 200) nach einem der Ansprüche 9 bis 12, wobei die Segmentsteuereinrichtungen (7a-f) der mindestens zwei Förderstreckensegmente (1a-f) eingerichtet sind, dass eine der Segmentsteuereinrichtungen (7a-f) der Steuergruppe eine Koordinationsaufgabe übernimmt, mittels der die Steuergruppe koordiniert wird um die Steuerfunktion auszuführen.

14. Sortiermechanismus (100, 200) nach einem der Ansprüche 9 bis 13, wobei die Segmentsteuereinrichtungen (7a-f) der mindestens zwei Förderstreckensegmente (1a-f) eingerichtet sind, dass sich eine Zusammensetzung von an der Steuergruppe teilnehmenden Segmentsteuereinrichtungen (7a-f) abhängig von einem Transportzustand wie beispielsweise einer Position oder einer Bewegung des Behälters (90) ändert und/oder, dass sich eine Aufgabe einer der Segmentsteuereinrichtungen (7a-f) innerhalb der Steuergruppe abhängig von einem Transportzustand des Behälters (90) ändert.

15. Sortiermechanismus (100, 200) nach einem der Ansprüche 9 bis 14, wobei die Segmentsteuereinrichtungen (7a-f) der mindestens zwei Förderstreckensegmente (1a-f) zum Ausführen der übergeordneten Steuerfunktion zumindest identische Programme oder identische Programmteile umfassen.

16. Sortiermechanismus (100, 200) nach einem der Ansprüche 9 bis 15, wobei die den mindestens zwei Förderstreckensegmenten (1a-f) zugeordneten Segmentsteuereinrichtungen (7a-f) eingerichtet sind zum Ausführen der übergeordneten Steuerfunktion nur mit den Segmentsteuereinrichtungen (7) von direkt benachbarten der mindestens zwei Förderstreckensegmente (1a-f) zu kommunizieren.

17. Sortiermechanismus (100, 200) nach einem der Ansprüche 9 bis 16, wobei zumindest eines, vorzugsweise mehrere, vorzugsweise alle der mindestens zwei Förderstreckensegmente (1a-f) jeweils mindestens ein Antriebsmittel zum Antreiben des Behälters (90) in Transportrichtung umfassen.

## Claims

1. Method for controlling a sorting mechanism (100, 200) that is designed to convey piece goods (99) which are to be sorted and are conveyed on a conveyor path (22) laterally out of the conveyor path (22) by means of coordinated tilting movements of conveyor path segments (1a-f) which can be tilted transversely to the conveyor path (22) and to transfer the piece goods (99) from a first tilted conveyor path segment (1a-f) to a second tilted conveyor path segment (1a-1f); **characterised in that**
a first actuator (4a-f) for tilting the first conveyor path segment (1a-f) is actuated by a first segment controller (7a-f), and a second actuator (4a-f) for tilting the second conveyor path segment (1b-f) is actuated by a second segment controller (7a-7f);
and wherein the method comprises that the first segment controller (7a-7f) and the second segment controller (7a-7f) communicate with each other in order to transfer the piece goods (99) from the first tilted conveyor path segment (7a-7f) to the second tilted conveyor path segment (7a-7f), wherein each of the conveyor path segments (1a-f) is controlled by a separate segment controller (7a-f) in each case, wherein the segment controllers (7a-f) communicate with each other in order to coordinate the coordinated tilting movements.

2. Method according to claim 1, wherein the segment controllers (7a-f) communicate with each other in order to dynamically combine some of the plurality of segment controllers (7a-f) to form a logical control group (G1, G2) depending on a position of the container (90).

3. Method according to claim 2, wherein one of the segment controllers (7a-f) of the control group (G1, G2) assumes a coordination task by means of which the control group is coordinated to perform one of the coordinated tilting movements.

4. Method according to claim 2 or 3, wherein a composition of segment controllers (7a-f) participating in the control group changes depending on a transport state such as, for example, a position or a movement of the container (90) and/or, wherein a task of one of the segment controllers (7a-f) within the control group changes depending on a transport state of the container (90).

5. Method according to one of the preceding claims, wherein at least some, preferably all the segment controllers (7a-f) comprise an identical program code in each case in order to transfer the piece goods (99) from a transferring tilted conveyor path segment (1a-f) to a subsequent tilted conveyor path segment (1a-1f).

6. Method according to one of the preceding claims, wherein the segment controllers (7a-f) only communicate directly with immediately adjacent segment controllers (7a-f) in each case.

7. Method according to one of the preceding claims, wherein the segment controllers (7a-f) communicate with each other to drive the drives of the conveyor path segment such that a target distance between two successive pieces is maintained.

8. Method according to one of the preceding claims, wherein the piece goods (99) are transferred from the first tilted conveyor path segment (1a-f) to the second tilted conveyor path segment (1a-1f) by the first and the second conveyor path segment (1a-f) performing a synchronous movement.

9. Sorting mechanism (100, 200) for sorting one item of the piece goods (99) out of a conveyor path (6), comprising:
- at least two conveyor path segments (1a-f) which on the one hand are designed and arranged to carry a container (90) filled with piece goods (99) at least a little way along a conveyor path (6), and which on the other hand can be tilted transversely to the conveyor path (6) by means of individual control;
- a control system (21) which is adapted to control the at least two conveyor path segments (1a-f) such that while it is still moving along the conveyor path (6), the container (90) is tilted such that the piece goods (99) are conveyed laterally out of the conveyor path by means of coordinated tilting movements of the at least two conveyor path segments (1a-f);
- wherein a separate segment controller (7a-f) is assigned to the at least two conveyor path segments (1a-f) in each case, wherein the segment controllers (7a-f) are set up to perform a control function for coordinating the coordinated tilting movements of the at least two conveyor path segments (1a-f).

10. Sorting mechanism (100, 200) according to claim 9, wherein the segment controllers (7a-f) of the conveyor path segments (1a-f) are communicatively connected to each other to perform at least one control function.

11. Sorting mechanism (100, 200) according to one of claims 9 or 10, wherein the at least one control function comprises at least one or more of the following functions for coordinating the coordinated tilting movements:
- performance of a transfer from one of the conveyor path segments (1a-f) to the next;
- performance of a wave-like tilting movement which runs through at least some of the conveyor path segments (1a-f);
- starting of at least one of the tilting movements;
- approaching of a target position of a tilting movement;
- starting of a timer;
- starting of a meter;
- inspection of a position to keep the tank in the tilting position for a defined period;
- starting of a reverse pivoting movement if a timer has expired;
- starting of a reverse pivoting movement if a position has been reached;
- approaching of a starting position.

12. Sorting mechanism (100, 200) according to one of claims 9 to 11, wherein the segment controllers (7a-f) are set up to dynamically combine some of the plurality of segment controllers (7a-f) to form a logical control group (G1, G2) depending on a position of the container (90).

13. Sorting mechanism (100, 200) according to one of claims 9 to 12, wherein the segment controllers (7a-f) of the at least two conveyor path segments (1a-f) are set up such that one of the segment controllers (7a-f) of the control group assumes a coordination task by means of which the control group is coordinated in order to perform the control function.

14. Sorting mechanism (100, 200) according to one of claims 9 to 13, wherein the segment controllers (7a-f) of the at least two conveyor path segments (1a-f) are set up such that a composition of segment controllers (7a-f) participating in the control group changes depending on a transport state such as, for example, a position or a movement of the container (90) and/or such that a task of one of the segment controllers (7a-f) changes within the control group depending on a transport state of the container (90).

15. Sorting mechanism (100, 200) according to one of claims 9 to 14, wherein the segment controllers (7a-f) of the at least two conveyor path segments (1a-f) comprise at least identical programs or identical program parts for performing the superordinate control function.

16. Sorting mechanism (100, 200) according to one of claims 9 to 15, wherein the segment controllers (7a-f) assigned to the at least two conveyor path segments (1a-f) are set up to only communicate with the segment controllers (7) of the at least two conveyor path segments (1a-f) which are directly adjacent for performing the superordinate control function.

17. Sorting mechanism (100, 200) according to one of claims 9 to 16, wherein at least one, preferably a plurality, preferably all the at least two conveyor path segments (1a-f) each comprise at least one drive means for driving the container (90) in the direction of transport.

## Revendications

1. Procédé de commande d'un mécanisme de tri (100, 200) qui est configuré pour acheminer latéralement hors de la voie de transport (22) un colis (99) à trier acheminé sur une voie de transport (22) au moyen de mouvements de basculement coordonnés de segments de voie de transport (1a-f) pouvant basculer transversalement à la voie de transport (22), et ce faisant pour transmettre le colis (99) d'un premier segment de voie de transport (1a-f) se trouvant dans un état basculé à un deuxième segment de voie de transport (1a-1f) se trouvant dans l'état basculé ;
**caractérisé en ce qu'**un
premier actionneur (4a-f) pour basculer le premier segment de voie de transport (1a-f) est commandé par un premier dispositif de commande de segment (7a-f), et un deuxième actionneur (4a-f) pour basculer le deuxième segment de voie de transport (1b-f) est commandé par un deuxième dispositif de commande de segment (7a-7f) ; et dans lequel le procédé comprend le fait que le premier dispositif de commande de segment (7a-7f) et le deuxième dispositif de commande de segment (7a-7f) communiquent ensemble pour transmettre le colis (99) du premier segment de voie de transport (7a-7f) se trouvant dans l'état basculé au deuxième segment de voie de transport (7a-7f) se trouvant dans l'état basculé, dans lequel chacun des segments de voie de transport (1a-f) est commandé par à chaque fois un dispositif de commande de segment distinct (7a-f), dans lequel les dispositifs de commande de segment (7a-f) communiquent ensemble pour coordonner les mouvements de basculement coordonnés.

2. Procédé selon la revendication 1, dans lequel les dispositifs de commande de segment (7a-f) communiquent ensemble pour, en fonction d'une position du conteneur (90), regrouper dynamiquement une partie des plusieurs dispositifs de commande de segment (7a-f) en un groupe de commande logique (G1, G2).

3. Procédé selon la revendication 2, dans lequel l'un des dispositifs de commande de segment (7a-f) du groupe de commande (G1, G2) assume une tâche de coordination au moyen de laquelle le groupe de commande est coordonné pour réaliser l'un des mouvements de bascule coordonnés.

4. Procédé selon la revendication 2 ou 3, dans lequel une combinaison de dispositifs de segment (7a-f) participant au groupe de commande se modifie en fonction d'un état de transport comme, par exemple, une position ou un mouvement du conteneur (90) et/ou, dans lequel une tâche d'un des dispositifs de commande de segment (7a-f) se modifie au sein du groupe de commande en fonction d'un état de transport du conteneur (90).

5. Procédé selon l'une des revendications précédentes, dans lequel au moins une partie, de préférence la totalité des dispositifs de commande de segment (7a-f), comprennent à chaque fois un code de programme identique pour transmettre le colis (99) d'un segment de voie de transport (1a-f) en transmission se trouvant dans un état basculé à un segment de voie de transport (1a-1f) suivant se trouvant dans un état basculé.

6. Procédé selon l'une des revendications précédentes, dans lequel les dispositifs de commande de segment (7a-f) communiquent directement à chaque fois uniquement avec des dispositifs de commande de segment (7a-f) directement contigus.

7. Procédé selon l'une des revendications précédentes, dans lequel les dispositifs de commande de segment (7a-f) communiquent ensemble pour entraîner des dispositifs d'entraînement des segments de voie de transport de sorte qu'un écartement théorique entre deux éléments de transport consécutifs est respecté.

8. Procédé selon l'une des revendications précédentes, dans lequel le colis (99) est transmis du premier segment de voie de transport (1a-f) se trouvant dans l'état basculé au deuxième segment de voie de transport (1a-f) se trouvant dans l'état basculé tandis que le premier et le deuxième segments de voie de transport (1a-f) effectuent un mouvement synchrone.

9. Mécanisme de tri (100, 200) pour trier un colis (99) à partir d'une voie de transport (6), comprenant :
- au moins deux segments de voie de transport (1a-f) qui, d'une part, sont configurés et disposés pour guider un conteneur (90) contenant un colis (99) au moins sur un tronçon le long de la voie de transport (6) et qui, d'autre part, peuvent être basculés transversalement à la voie de transport (6) par commande individuelle ;
- un système de commande (21), qui est adapté pour commander les au moins deux segments de voie de transport (1a-f) de manière que le conteneur (90) alors qu'il se déplace encore le long de la voie de transport (6), est basculé au moyen de mouvements de basculement coordonnés des au moins deux segments de voie de transport (1a-f) de sorte que le colis (99) est acheminé latéralement hors de la voie de transport ;
- dans lequel à chaque fois un dispositif de commande de segment distinct (7a-f) est affecté aux au moins deux segments de voie de transport (1a-f), dans lequel les dispositifs de commande de segment (7a-f) sont mis en place pour effectuer une fonction de commande pour une coordination des mouvements de basculement coordonnés des au moins deux segments de voie de transport (1a-f).

10. Mécanisme de tri (100, 200) selon la revendication 9, dans lequel les dispositifs de commande de segment (7a-f) des segments de voie de transport (1a-f) sont reliés ensemble de façon communicative pour effectuer la au moins une fonction de commande.

11. Mécanisme de tri (100, 200) selon l'une des revendications 9 ou 10, dans lequel la au moins une fonction de commande pour une coordination des mouvements de basculement coordonnés comprend au moins une ou plusieurs des fonctions suivantes :
- exécution d'une transmission d'un des segments de voie de transport (1a-f) au suivant ;
- exécution d'un mouvement de basculement de façon ondulatoire qui se déroule par au moins une partie des segments de voie de transport (1a-f) ;
- démarrage d'au moins l'un des mouvements de basculement ;
- approche d'une position cible d'un mouvement de basculement ;
- démarrage d'un chronométreur ;
- démarrage d'un compteur ;
- vérification d'une position pour maintenir la cuve dans la position de basculement pour une durée définie ;
- démarrage d'un mouvement de pivotement en retour lorsqu'un chronométreur a expiré ;
- démarrage d'un mouvement de pivotement en retour lorsqu'une position est atteinte ;
- approche d'une position de départ.

12. Mécanisme de tri (100, 200) selon l'une des revendications 9 à 11, dans lequel les dispositifs de commande de segment (7a-f) sont mis en place pour, en fonction d'une position du conteneur (90), regrouper dynamiquement une partie des plusieurs dispositifs de commande de segment (7a-f) en un groupe de commande logique (G1, G2).

13. Mécanisme de tri (100, 200) selon l'une des revendications 9 à 12, dans lequel les dispositifs de commande de segment (7a-f) des au moins deux segments de voie de transport (1a-f) sont mis en place de sorte qu'un des dispositifs de commande de segment (7a-f) du groupe de commande assume une tâche de coordination au moyen de laquelle le groupe de commande est coordonné pour réaliser la fonction de commande.

14. Mécanisme de tri (100, 200) selon l'une des revendications 9 à 13, dans lequel les dispositifs de commande de segment (7a-f) des au moins deux segments de voie de transport (1a-f) sont mis en place de sorte qu'une combinaison de dispositifs de commande de segment (7a-f) participant au groupe de commande se modifie en fonction d'un état de transport comme, par exemple, une position ou un mouvement du conteneur (90) et/ou de sorte qu'une tâche d'un des dispositifs de commande de segment (7a-f) se modifie au sein du groupe de commande en fonction d'un état de transport du conteneur (90).

15. Mécanisme de tri (100, 200) selon l'une des revendications 9 à 14, dans lequel les dispositifs de commande de segment (7a-f) des au moins deux segments de voie de transport (1a-f) comprennent au moins des programmes identiques ou des parties de programme identiques pour effectuer la fonction de commande affectée.

16. Mécanisme de tri (100, 200) selon l'une des revendications 9 à 15, dans lequel les dispositifs de commande de segment (7a-f) affectés aux au moins deux segments de voie de transport (1a-f) sont mis en place pour effectuer la fonction de commande affectée en communiquant uniquement avec les dispositifs de commande de segment (7) des au moins deux segments de voie de transport (1a-f) directement contigus.

17. Mécanisme de tri (100, 200) selon l'une des revendications 9 à 16, dans lequel au moins un, de préférence plusieurs, de préférence la totalité des au moins deux segments de voie de transport (1a-f) comprennent à chaque fois au moins un moyen d'entraînement pour entraîner le conteneur (90) dans le sens de transport.
